# EUROPEAN PATENT SPECIFICATION

(11) **EP 2 217 806 B1**
(45) Date of publication and mention of the grant of the patent: **13.08.2014**
(21) Application number: 07861906.1
(22) Date of filing: 09.11.2007
(51) Int. Cl.: F03D 7/02

(54) **ELECTRO-HYDRAULIC ACTUATOR FOR CONTROLLING THE PITCH OF A BLADE OF A WIND TURBINE**
ELEKTROHYDRAULISCHES STELLGLIED ZUR STEUERUNG DES ANSTELLWINKELS EINER WINDTURBINENSCHAUFEL
ACTIONNEUR ÉLECTROHYDRAULIQUE POUR LA COMMANDE DU PAS D'UNE PALE D'ÉOLIENNE

(43) Date of publication of application: 18.08.2010
(73) Proprietor: Moog Inc., Salt Lake City 84119 (US)
(72) Inventor: GEIGER, David, Orchard Park NY 14127 (US)
(74) Representative: Barton, Russell Glen
(86) International application number: PCT/US2007/023681
(87) International publication number: WO 2009/064264

(56) References cited:
- WO-A-99/23384
- DE-A1- 10 146 968
- DE-U1- 20 017 994
- DE-U1- 20 317 749
- FR-A- 2 748 296
- US-A- 5 145 324

## Description

### Technical Field

The present invention relates generally to the field of wind turbines, and, more particularly, to an improved wind turbine having a plurality of electro-hydraulic actuators mounted on the rotatable hub of the turbine for independently controlling the pitch of a like plurality of blades.

### Background Art

Wind turbines are, of course, known. In recent years, many of the problems of having a wind turbine supply power synchronously to an electrical grid have been addressed and overcome.

Wind turbines today are relatively sophisticated. They are typically mounted on a tower, and have plurality of blades (normally three) mounted on a hub for rotation about a horizontal axis relative to a nacelle. The nacelle may be aimed into the direction of the oncoming wind. Each of the blades is typically of variable pitch, and the pitch of each blade may be controlled independently of the others. These blades are typically arranged at 120° intervals. When one blade is pointing downwardly toward the 6 o'clock position, the wind proximate the ground is typically less than the speed of the wind moving over the other two blades. Hence, the pitch of each blade is controlled independently of one another with the goal trying to normalize (i.e., keep reasonably constant) the rotational speed of the hub from ground effects, gusts, etc.

Heretofore, wind turbines have been characterized as being of the electrical-type or of the hydraulic-type. In either case, the generator is typically mounted in the nacelle. Control signals and power are supplied up through the tower to a pitch-controlling mechanism. In both cases, this pitch-controlling mechanism has been heretofore mounted in the nacelle, and this necessitates a type of slip ring joint between the nacelle and the rotatable hub. In addition, this arrangement has been accompanied by the use of a large bull gear, and with various hoses within the hub. The life expectancy of such an arrangement has been as short as about four years due to excessive wear on the bull gear caused principally by variations in the speed of the wind.

Accordingly, it would be generally desirable to provide an improved wind turbine in which the pitch-controlling electro-hydraulic actuator is mounted within the hub, rather than on the nacelle.

A windmill with a gondola in which a rotor is fixed is disclosed in DE10146968. The angle of attack of the rotor blades mounted on the rotor hub can be adjusted by a hydraulic adjuster mechanism, depending on the wind strength. Hydraulic pumps and the drive for the same and optionally pressure reservoirs etc, are fixed on the rotor or the rotor shaft.

### Disclosure of the Invention

With parenthetical reference to the corresponding parts, portions or surfaces of the disclosed embodiment, merely for purposes of illustration and not by way of limitation, the present invention provides an improvement for use in a wind turbine (20) having a plurality of variable-pitch blades (24) mounted on a hub (23) for rotation relative to a nacelle (22).

The improvement broadly includes: a electro-hydraulic actuator (25) for controlling the pitch of one of the blades, the actuator including: a motor (26) adapted to be supplied with a current; a pump (27) driven by the motor and arranged to provide a hydraulic output as a function of the current supplied to the motor; and a hydraulic actuator (28) opera- tively arranged to selectively vary the pitch of the associated blade as a function of the hydraulic output of the pump; and wherein the motor, pump and actuator are physically arranged within the hub of the wind turbine.

In one form, the wind turbine has three of the variable-pitch blades (24) mounted on the hub, and wherein one of the electro-hydraulic actuators (25) is provided for each of the blades.

The motor may be a d.c. brushless motor.

The pump may be a fixed displacement pump.

In the preferred embodiment, the polarity of the hydraulic output from the pump is a function of the polarity of the current supplied to the motor.

The actuator may have a piston (30) slidably mounted within a cylinder (31) and sealingly separating a first chamber (35) on one side of the piston from a second chamber (36) on the other side of the piston, and wherein a rod (32) is mounted on the piston and extends through chamber (35) and penetrates and end wall of the cylinder such that the piston has unequal-area surfaces facing into the chambers.

The improved actuator may further include a hydraulic reservoir (41) and an anti-cavitation valve (57) operatively arranged between the tank and the actuator such that hydraulic fluid will flow from the reservoir to the chamber facing the larger-area piston face when such chamber is expanding, and will flow to the reservoir from the chamber facing the larger-area piston face when such chamber is contracting.

The hydraulic reservoir may be pressurized.

The anti-cavitation valve may operate automatically as a function of the polarity of the hydraulic output of the pump.

The improvement may further include a pressure relief valve (48, 52) operatively arranged to limit the maximum pressure of the pump hydraulic output.

The pump may have a high-pressure side and a low-pressure side, and a case drain.

A bypass valve (54) may be positioned selectively operable to communicate the high- and low-pressure sides.

The case drain (40) may communicate with the reservoir through a filter.

The improvement may further include a restricted orifice (56) in series with the bypass valve.

The improvement may further include: a source (62) of pressurized hydraulic fluid communicating via a conduit (63) with the chamber into which the small-area piston surface faces, and a normally-closed solenoid valve (64) arranged in the conduit, and wherein the solenoid valve is arranged to be opened in the event of a power failure to permit hydraulic fluid to flow from the source through the conduit and into the chamber into which the small-area piston surface faces to cause such chamber to expand and to urge the piston to move toward a position relative to the cylinder at which the blade is feathered.

The improvement may further include blocking valves (59, 60) operatively arranged to selectively isolate the pump from the small- and large-area actuator chambers.

Power and/or control signals to the motor are preferably supplied form the nacelle to the hub through a contactless rotary transformer. Examples of these are shown and described in U.S. Pats. No. 5,608,771, 6.813,316 and 5,572,178.

Accordingly, the general object of the invention is to provide an improved electro- hydraulic actuator for use in a wind turbine to control the pitch of one of a plurality of variable-pitch blades thereon.

Another object is to provide an improved electro-hydraulic actuator for use in a wind turbine, wherein the major components of the actuator are mountable on the rotating hub and not on the nacelle.

Another object is to provide an improved actuator for use in a wind turbine, and wherein the actuator contains a fail-safe mechanism for urging the associated blade to move toward a feathered position in the event of a power failure or interruption.

These and other objects and advantages will become apparent from the foregoing and ongoing written specification, the drawings and the appended claims.

### Brief Description of the Drawings

Fig. 1 is an isometric view of the upper marginal end portion of a wind turbine, showing fragmentary portions of the variable-pitch blades as being mounted on the hub for rotation about a horizontal axis relative to a nacelle.
Fig. 2 is a hydraulic schematic of the improved electro-hydraulic actuator.
Fig. 3 is a left side elevation of an improved electro-hydraulic actuator for controlling the pitch of one of the blades.
Fig. 4 is a top plan view of the actuator shown in Fig. 3.
Fig. 5 is a left end elevation of the actuator shown in Fig. 4.
Fig. 6 is a block diagram of the circuit for independently controlling the three blades.

### Description of the Preferred Embodiments

At the outset, it should be clearly understood that like reference numerals are intended to identify the same structural elements, portions or surfaces consistently throughout the several drawing figures, as such elements, portions or surfaces may be further described or explained by the entire written specification, of which this detailed description is an integral part. Unless otherwise indicated, the drawings are intended to be read (e.g., cross- hatching, arrangement of parts, proportion, degree, etc.) together with the specification, and are to be considered a portion of the entire written description of this invention. As used in the following description, the terms "horizontal", "vertical", "left", "right", "up" and "down", as well as adjectival and adverbial derivatives thereof (e.g., "horizontally", "rightwardly", "upwardly", etc.), simply refer to the orientation of the illustrated structure as the particular drawing figure faces the reader. Similarly, the terms "inwardly" and "outwardly" generally refer to the orientation of a surface relative to its axis of elongation, or axis of rotation, as appropriate.

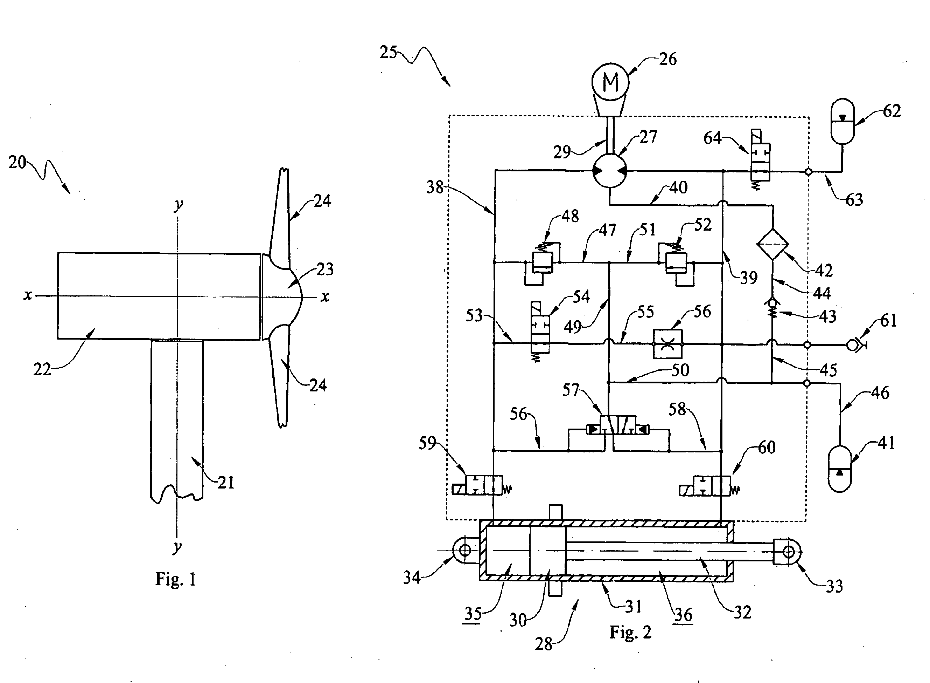

Referring now to the drawings, and more particularly to Fig. 1 thereof, an improved wind turbine, generally indicated at 20, is shown as being mounted on the upper marginal end portion of a tower, a fragmentary portion of which is generally indicated at 21. A nacelle 22 is rotatably mounted on the upper marginal end portion of the tower for rotation about a vertical axis y-y. A hub 23 is mounted on the nacelle for rotation about a horizontal axis x-x. A plurality of blades, severally indicated at 24, are mounted on the hub for rotation therewith. The pitch of each blade is independently controllable by means of the improved electro- hydraulic actuators disclosed herein. A main shaft (not shown) transfers rotational movement of the hub into the nacelle, to drive a generator (not shown) in the usual manner. The nacelle also includes various usual and typical items, such as gear box (not shown), for increasing the speed of the driven shaft, transformers (not shown), and the like.

Heretofore, the mechanism for controlling the pitch of the blades was mounted on the nacelle, and control was transferred to the hub by means of a bull gear. In the present invention, however, the electro-hydraulic actuators are mounted within the hub, and the bull gear can be eliminated altogether.

Referring now to Fig. 2, the improved electro-hydraulic actuator 25 is schematically indicated as including a motor 26, a pump 27 driven by the motor, and a double-acting hydraulic actuator, generally indicated at 28.

In the preferred embodiment, the motor is a brushless D. C. motor that is supplied with a current from the nacelle via a contactless rotary transformer (not shown). When the supplied current is of one polarity, the motor will rotate in one direction. When the supplied current supplied is of the opposite polarity, the motor will rotate in the opposite direction.

Pump 27 is preferably a fixed displacement pump, and is connected to the motor by means of a shaft 29.

The actuator 28 is shown as having a piston 30 slidably mounted within a cylinder 31. A rod 32 as its left end mounted on the piston, and penetrates the cylinder right end wall. An eye 33 is mounted on the right end of rod 32. Another eye 34 is shown as being mounted on the cylinder left end wall. The piston is slidably mounted within the cylinder, and seal- ingly separates a leftward chamber 35 from a rightward chamber 36. The entire circular vertical end surface of piston 30 faces into left chamber 35. However, an annular vertical surface of the piston faces rightwardly into right chamber 36. The entire electro-hydraulic actuator is mounted within the rotatable hub of the wind turbine. Eye 34 is mounted to the ro- tatable hub, and eye 33 is mounted to a lever arm (not shown) connected to control the pitch of the associated blade.

One side of pump 27 communicates with actuator left chamber 35 via a conduit 38, and the opposite side of pump 27 communicates with actuator right chamber 36 via a conduit 39. A drain conduit 40 communicates a portion of the pump flow with a reservoir 41 via a filter 42 and a check valve 43. More particularly, conduit 40 extends between the case drain and the filter, conduit 44 communicates the filter 42 with check valve 43, and conduit 45 communicates check valve 43 with another conduit 46 communicating with the reservoir or tank 41. This tank is shown as having a diaphragm, and is gas pressurized to a pressure of about 90-250 psi.

Conduit 38 communicates with tank or reservoir 41 via a conduit 47 which includes a high- pressure relief valve 48 and connected conduits 49, 50 and 46. Conduit 39 communicates with tank 41 via conduit 51 which contains another high-pressure relief valve 52, and connected conduits 49, 50 and 46. The function of pressure relief valves 48, 52 is to provide a relief for an over-pressure condition depending on the polarity of the pump operation. Conduit 38 also communicates with conduit 39 via a conduit 53, a bypass solenoid 54, and a conduit 55 containing a restricted orifice 56.

Conduits 38 and 39 also communicate with one another via a conduit 56, an anti- cavitation valve 57, and a conduit 58. Solenoid-operated bypass valves 59, 60 are positioned in conduit 38, 39, respectively. The anti-cavitation valve 57 is a type of inverse shuttle valve that samples the pressure of the fluid in conduits 38, 39, and moves automatically in response to the pressure differential therebetween. The function of anti-cavitation valve 57 is to accommodate the volumetric changes between opposed actuator chambers 35, 36. In other words, when piston moves leftwardly within the cylinder, the volume of fluid removed from collapsing left chamber 35 will be greater than the volume of fluid supplied to expanding right chamber 36. The anti-cavitation valve functions to permit the excess or differential fluid to flow through conduits 46, 49, 50 to the reservoir. Conversely, when the actuator piston moves rightwardly relative to the cylinder, a differential amount of fluid may flow from reservoir 41 through conduit 46 and the anti-cavitation valve into the expanding left actuator chamber.

A charge fitting 61 communicates with conduit 39 to allow fluid to be added to the system. A fail-safe accumulator 62 communicates with conduit 39 via a conduit 63 containing a normally-closed solenoid valve 64.

When the wind turbine is first started, bypass valves 59, 60 are closed, and fluid is first pumped into accumulator 62 to charge and pressurize this accumulator to about 3,000 psi. Thereafter, valves 59, 60 are opened to permit fluid to flow to the actuator.

The function of the fail-safe accumulator 62 is to provide a source of pressurized hydraulic fluid to the system in the event of a loss of power to the motor. In the event of a power failure, fail-safe accumulator 62 will provide a source of pressurized hydraulic fluid to displace the actuator rod leftwardly toward a feathered positioned of the blade.

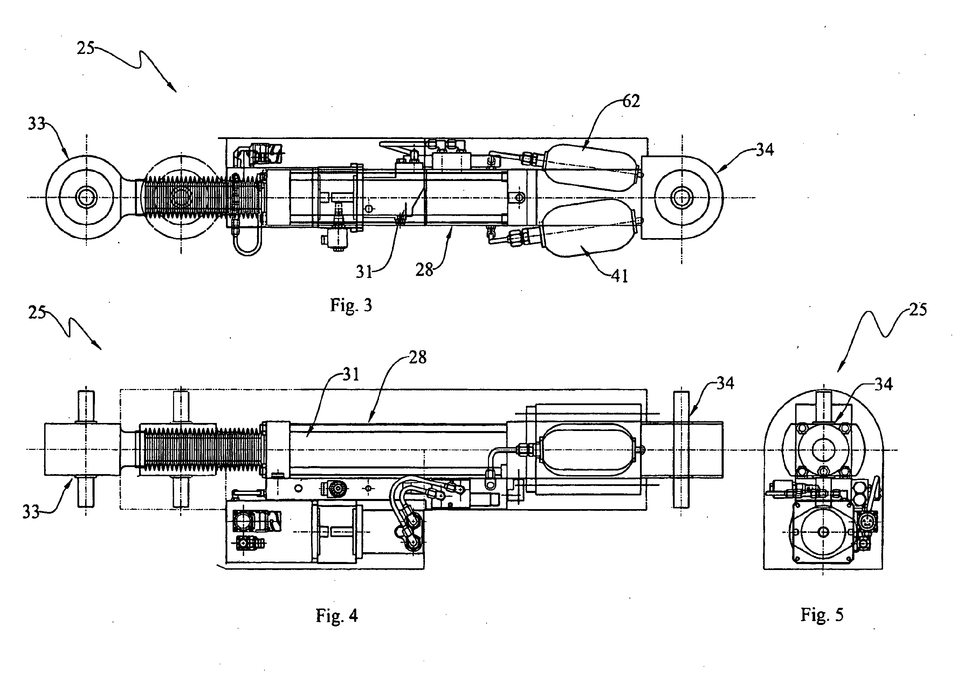

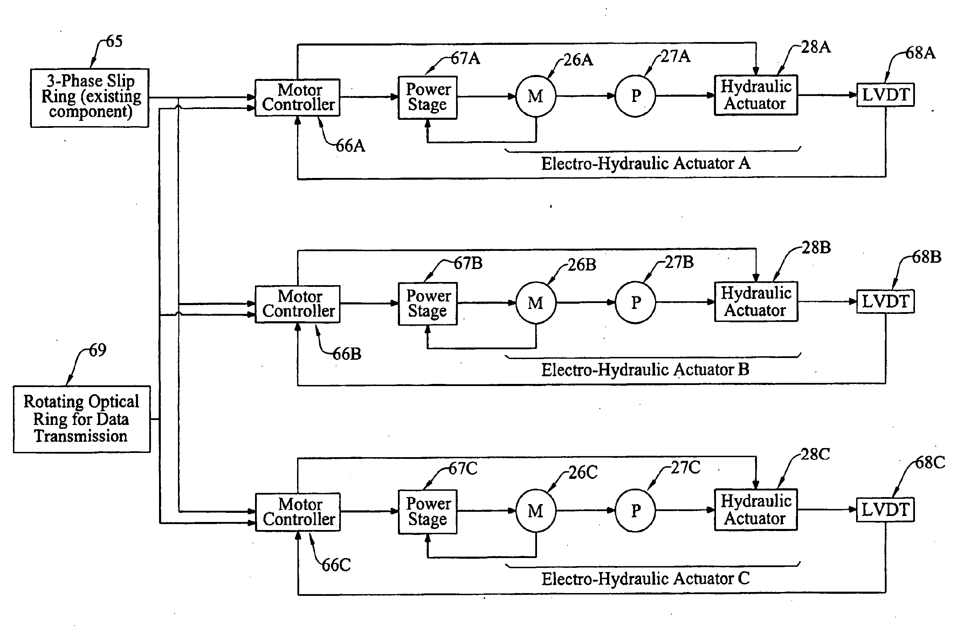

A commercial form of the apparatus is depicted in Figs. 3-5, in which the same number is used to refer to the parts previously described.

Referring now to Fig. 6, a larger control system for independently controlling the pitch of each of three blades is depicted. A signal from a three-phase slip ring 65 is supplied to each of three motor controllers 66A, 66B, 66C. Each motor controller supplies a signal to a power stage 67A, 67B, 67C, respectively, which in turn supplies the current of the appropriate magnitude and polarity to electro-hydraulic actuators A, B and C, respectively. The position of each rod 32 is monitored via an LVDT 68A, 68B, 68C, respectively, and the position signals are then fed back to their associated motor controllers, 66A, 66B, 66C, respectively. A rotating optical ring for data transmission 69 also provides an input signal to each motor controller. Thus, in this manner, the system may control the pitch of each blade independently. Of course, the arrangement shown in Fig. 6 is specific to a three-bladed wind turbine. If a greater or lesser number of blades were to be employed, the number of actuators would be correspondingly adjusted.

### Modifications

The present invention expressly contemplates that many changes and modifications may be made. In the improved wind turbine, an electro-hydraulic actuator is provided for each blade so that the pitch of the various blades can be controlled independently of one another. While it is presently preferred to use a D. C. brushless motor, other types of motors may be used as well. Similarly, while the fixed-displacement pump is presently preferred, other types of pumps might possibly be substituted therefor.

The actuator might, of course, have a rod penetrating both cylinder end walls. However, this would likely interfere with the nose of the hub. Nevertheless, if arrangement could be accommodated, there would be no need for the anti-cavitation valve since the volume of the expanding chamber would equal the volume of the collapsing chamber.

If desired, the motor controller and the power stage can be incorporated directly into the improved hub-mounted electro-hydraulic actuator.

Therefore, while the presently-preferred form of the improvement has been shown and described, and several modifications thereof discussed, persons skilled in this art will readily appreciate that various additional changes and modifications may be made without departing from the scope of the invention, as defined and differentiated by the following claims.

## Claims

1. A wind turbine (20) having a plurality of variable-pitch blades (24) mounted on a hub (23) for rotation relative to a nacelle (22), the wind turbine comprising:
an electro-hydraulic actuator (25) for controlling the pitch of one of said blades, said actuator including:
a motor (26) adapted to be supplied with a current;
a pump (27) driven by said motor and arranged to provide a hydraulic output as a function of the current supplied to said motor; and
a hydraulic actuator (28) operatively arranged to selectively vary the pitch of the associated blade as a function of the hydraulic output of said pump; and
**characterised in that** said motor, pump and actuator are physically arranged within the hub of said wind turbine.

2. The wind turbine (20) of claim 1, wherein said wind turbine (20) has three of said variable-pitch blades (24) mounted on said hub (23), and wherein one of said electro-hydraulic actuators (25) is provided for each of said blades.

3. The wind turbine (20) of claim 1, wherein said motor (26) is a d.c. brushless motor and/or said pump (27) is a fixed displacement pump.

4. The wind turbine (20) of claim 1, wherein the polarity of the hydraulic output from said pump (27) is a function of the polarity of the current supplied to said motor (26).

5. The wind turbine (20) of claim 1 wherein said actuator has a piston slidably mounted within a cylinder and sealingly separating a first chamber on one side of said piston from a second chamber on the other side of said piston, and wherein a rod is mounted on said piston and extends through one of said chambers and penetrates and end wall of said cylinder such that said piston has unequal-area surfaces facing into said chambers

6. The wind turbine (20) of claim 5, further comprising a hydraulic reservoir (41) and an anti-cavitation valve (57) operatively arranged between said reservoir and said actuator such that hydraulic fluid will flow from said reservoir to the chamber facing said larger-area piston face when such chamber is expanding, and will flow to said reservoir from the chamber facing said larger-area piston face when such chamber is contracting.

7. The wind turbine (20) of claim 6, wherein said hydraulic reservoir (41) is pressurized.

8. The wind turbine (20) of claim 6, wherein said anti-cavitation valve (57) operates automatically as a function of the polarity of the hydraulic output of said pump.

9. The wind turbine (20) of any preceding claim, further comprising a pressure relief valve (48,52) operatively arranged to limit the maximum pressure of said pump hydraulic output.

10. The wind turbine (20) of claim 6, wherein said pump has a high-pressure side and a low-pressure side, and a case drain, preferably wherein said case drain communicates with said reservoir through a filter.

11. The wind turbine (20) of any preceding claim, further comprising a bypass valve (54) positioned selectively operable to communicate said high- and low-pressure sides., preferbaly, ,further comprising a restricted orifice in series with said bypass valve (54).

12. The wind turbine (20) of claim 5, further comprising:
a source of pressurized hydraulic fluid communicating via a conduit with the chamber into which said small-area piston surface faces, and
a normally-closed solenoid valve arranged in said conduit, and
wherein said solenoid valve is arranged to be opened in the event of a power failure to permit hydraulic fluid to flow from said source through said conduit and into the chamber into which said small-area piston surface faces to cause such chamber to expand and to urge said piston to move toward a position relative to said cylinder at which said blade is feathered.

13. The wind turbine (20) of claim 12, further comprising blocking valves (59,60) operatively arranged to selectively isolate said pump from said small- and large-area actuator chambers.

14. The wind turbine (20) of any preceding claim, wherein power from said nacelle (22) is provided to said motor through a contactless rotary transformer.

15. The wind turbine (20) of any preceding claim, further comprising a motor controller and a power stage, and wherein said motor controller and said power stage are also physically arranged within the hub of said turbine.

16. The wind turbine (20) of claim 15, wherein said motor controller and said power stage are mounted on said electro-hydraulic actuator (25).

## Patentansprüche

1. Eine Windturbine (20) mit einer Mehrzahl von Rotorblättern (24) mit verstellbarem Anstellwinkel, welche an einer Nabe (23) befestigt sind, um relativ zu einer Triebwerksgondel (22) zu rotieren, wobei die Windturbine aufweist:
einen elektro-hydraulischen Aktor (25) zur Steuerung des Anstellwinkels eines der Rotorblätter, wobei der Aktor beinhaltet:
einen Motor (26), der dazu eingerichtet ist, mit einem Strom versorgt zu werden;
eine Pumpe (27), welche von diesem Motor angetrieben wird, und dazu eingerichtet ist, einen hydraulischen Ertrag als eine Funktion des Stromes zu erbringen, mit welchem der Motor versorgt wird; und
einen hydraulischen Aktor (28), welcher operativ dazu eingerichtet ist den Anstellwinkel des zugeordneten Rotorblattes als eine Funktion des hydraulischen Ertrags der Pumpe selektiv zu variierten; und
**dadurch gekennzeichnet ist, dass** der Motor, die Pumpe und der Aktor physikalisch innerhalb der Nabe der Windturbine angeordnet sind.

2. Die Windturbine (20) nach Anspruch 1, wobei die Windturbine (20) drei der Rotorblätter mit variablem Anstellwinkel (24) aufweist, welche an der Nabe (23) befestigt sind, und wobei einer der elektro-hydraulischen Aktoren (25) für jedes der Rotorblätter vorgesehen ist.

3. Die Windturbine (20) nach Anspruch 1, wobei der Motor (26) ein bürstenloser Gleichstrommotor und/oder die Pumpe (27) eine fixierte Verdrängungspumpe ist.

4. Die Windturbine (20) nach Anspruch 1, wobei die Polarität des hydraulischen Ertrags von der Pumpe (27) eine Funktion der Polarität des Stromes ist, mit dem der Motor (26) versorgt wird.

5. Die Windturbine (20) nach Anspruch 1, wobei besagter Aktor einen Kolben aufweist, welcher gleitbeweglich innerhalb eines Zylinders angebracht ist und abdichtend eine erste Kammer auf einer Seite des Kolbens von einer zweiten Kammer auf der anderen Seite des Kolbens trennt, und wobei eine Stange an dem Kolben angebracht ist und durch eine der Kammern reicht und eine Endwand des Zylinders so durchstößt, dass der Zylinder ungleichflächige Oberflächen, welche in die Kammern zeigen, aufweist.

6. Die Windturbine (20) nach Anspruch 5, weiterhin umfassend ein hydraulisches Reservoir (41) und ein Nachsaugventil (57), welches operativ zwischen dem Reservoir und dem Aktor angeordnet ist, so dass das hydraulische Fluid von dem Reservoir zu der Kammer fließt, die zur größerflächigen Kolbenseite zeigt, wenn die Kammer sich vergrößert und dass es zum Reservoir von der Kammer fließt, die zur größerflächigen Kolbenseite zeigt, wenn die Kammer sich zusammen zieht.

7. Die Windturbine (20) nach Anspruch 6, wobei das hydraulische Reservoir (41) unter Druck steht.

8. Die Windturbine (20) nach Anspruch 6, wobei das Nachsaugventil (57) automatisch als eine Funktion der Polarität des hydraulischen Ertrags der Pumpe operiert.

9. Die Windturbine (20) nach einem vorhergehenden Anspruch, weiterhin umfassend ein Überdruckventil (48, 52), welches operativ dazu eingerichtet ist, den maximalen Druck des hydraulischen Ertrags der Pumpe zu begrenzen.

10. Die Windturbine (20) nach Anspruch 6, wobei die Pumpe eine Hochdruckseite und eine Niederdruckseite aufweist und einen Leckflüssigkeitsanschluss, wobei bevorzugt der Leckflüssigkeitsanschluss mit dem Reservoir durch einen Filter kommuniziert.

11. Die Windturbine (20) nach einem vorhergehenden Anspruch, weiterhin umfassend ein Umgehungsventil (54), welches so positioniert ist, dass es selektiv betreibbar ist, um die Hoch- und Niederdruckseiten zu kommunizieren, bevorzugt weiterhin umfassend eine begrenzte Öffnung in Reihe mit dem Umgehungsventil (54).

12. Die Windturbine (20) nach Anspruch 5, weiterhin aufweisend:
eine Quelle unter Druck stehenden hydraulischen Fluides, welche über einen Kanal mit der Kammer kommuniziert, in welche die kleinflächige Kolbenoberfläche zeigt,
und
ein normal-geschlossenes Magnetventil, welches in dem Kanal angeordnet ist und wobei das Magnetventil dazu eingerichtet ist, im Fall eines Leistungsfehlers geöffnet zu werden, um hydraulischem Fluid zu erlauben, von der Quelle durch den Kanal und in die Kammer zu fließen, in welche die kleinflächige Kolbenoberfläche zeigt, um dieser Kammer zum Expandieren zu bringen und den Kolben zu drängen, sich zu einer Position zu bewegen, welche relativ zu den Zylinder ist, an welcher das Rotorblatt abgedreht wird.

13. Die Windturbine (20) nach Anspruch 12, weiterhin aufweisend Sperrventile (59, 60), welche operativ dazu eingerichtet sind, selektiv die Pumpe von den klein- und großflächigen Aktorkammern zu isolieren.

14. Die Windturbine (20) nach einem vorhergehenden Anspruch, wobei Leistung von der Triebwerksgondel (22) zu dem Motor über einen kontaktlosen Rotationstransformator bereitgestellt wird.

15. Die Windturbine (20) nach einem vorhergehenden Anspruch, weiterhin umfassend eine Motorsteuerung und eine Leistungsstufe, und wobei die Motorsteuerung und die Leistungsstufe auch physikalisch innerhalb der Nabe der Turbine angeordnet sind.

16. Die Windturbine (20) nach Anspruch 15, wobei die Motorsteuerung und die Leistungsstufe an dem elektro-hydraulischen Aktor (25) angebracht sind.

## Revendications

1. Eolienne (20) équipée d'un ensemble de pales (24) ayant un pas variable montées sur un moyeu (23) pour permettre leur rotation par rapport à une nacelle (22), cette éolienne comprenant :
- un actionneur électro-hydraulique (25) permettant de commander le pas de l'une des pales, cet actionneur comprenant :
• un moteur (26) pouvant être alimenté en courant,
• une pompe (27) entraînée par le moteur et réalisée pour fournir une sortie hydraulique en fonction du courant alimentant le moteur, et
• un actionneur hydraulique (28) opérativement réalisé pour faire varier sélectivement le pas de la pale associée en fonction de la sortie hydraulique de la pompe,
**caractérisé en ce que**
le moteur, la pompe et l'actionneur sont physiquement situés dans le moyeu de l'éolienne.

2. Eolienne (20) conforme à la revendication 1,
comportant trois pales à pas variable (24) montées sur le moyeu (23), l'un des actionneurs électro-hydraulique (25) étant prévu pour chacune de ces pales.

3. Eolienne (20) conforme à la revendication 1,
dans laquelle le moteur (26) est un moteur à courant continu sans balais et/ou la pompe (27) est une pompe à déplacement fixe.

4. Eolienne (20) conforme à la revendication 1,
dans laquelle la polarité de la sortie hydraulique de la pompe (27) est une fonction de la polarité du courant fourni au moteur (26).

5. Eolienne (20) conforme à la revendication 1,
dans laquelle l'actionneur comporte un piston monté mobile en glissement dans un cylindre et séparant de façon étanche une première chambre située d'un côté de ce piston d'une seconde chambre située de l'autre côté du piston, et une tige est montée sur ce piston, s'étend au travers de l'une de ces chambres et s'étend au travers d'une paroi d'extrémité du cylindre de sorte que les faces du pistons en regard de ces chambres aient des surfaces inégales.

6. Eolienne (20) conforme à la revendication 5,
comprenant en outre un réservoir de fluide hydraulique (41) et une soupape anti-cavitation (57) montée opérativement entre le réservoir et l'actionneur de sorte que du fluide hydraulique s'écoule du réservoir vers la chambre située en regard de la face du piston ayant la plus grande surface lorsque cette chambre se déploie, et s'écoule vers le réservoir à partir de la chambre située en regard de la face du piston ayant la plus grande surface lorsque cette chambre se contracte.

7. Eolienne (20) conforme à la revendication 6,
dans laquelle le réservoir hydraulique (41) est sous pression.

8. Eolienne (20) conforme à la revendication 6,
dans laquelle la soupape anti-cavitation (57) fonctionne automatiquement en fonction de la polarité de la sortie hydraulique de la pompe.

9. Eolienne (20) conforme à l'une quelconque des revendications précédentes,
comprenant en outre une soupape de sécurité (48, 52) réalisée opérativement pour limiter la pression maximum de la sortie hydraulique de la pompe.

10. Eolienne (20) conforme à la revendication 6,
dans laquelle la pompe a un côté haute pression et un côté basse pression et un carter de vidange, ce carter de vidange communiquant de préférence avec le réservoir par l'intermédiaire d'un filtre.

11. Eolienne (20) conforme à l'une quelconque des revendications précédentes,
comportant un une soupape de dérivation (54) positionnée de façon à pouvoir être sélectivement commandée pour faire communiquer les côtés haute et basse pression, et comprenant en outre de préférence un orifice d'étranglement monté en série avec la soupape de dérivation (54).

12. Eolienne (20) conforme à la revendication 5,
comprenant en outre :
- une source de fluide hydraulique sous pression communiquant par l'intermédiaire d'une conduite avec la chambre située en regard de la face du piston ayant une faible surface, et
- une soupape magnétique normalement formée, montée dans cette conduite, et
- la soupape magnétique étant réalisée de façon à s'ouvrir en cas de défaut de puissance pour permettre au fluide hydraulique de s'écouler à partir de la source, par la conduite et dans la chambre située en regard de la face du piston ayant une faible surface, pour provoquer le déploiement de cette chambre et pour solliciter le piston de sorte qu'il se déplace vers une position par rapport au cylindre pour laquelle la pale est mise en drapeau.

13. Eolienne (20) conforme à la revendication (12)
comprenant des soupapes de blocage (59, 60) opérativement réalisées pour isoler sélectivement la pompe des chambres d'actionneur à petite et à grande surface.

14. Eolienne (20) conforme à l'une quelconque des revendications précédentes dans laquelle la puissance provenant de la nacelle (22) est fournie au moteur par un transformateur rotatif sans contact.

15. Eolienne (20) conforme à l'une quelconque des revendications précédentes,
comprenant en outre un contrôleur moteur et un étage de puissance et dans laquelle le contrôleur moteur et l'étage de puissance sont également disposés physiquement dans le moyeu de la turbine.

16. Eolienne (20) conforme à la revendication 15,
dans laquelle le contrôleur moteur et l'étage de puissance sont montés sur l'actionneur électro-hydraulique (25).
